# EUROPÄISCHE PATENTSCHRIFT

(11) **EP 1 706 057 B1**
(45) Veröffentlichungstag und Bekanntmachung des Hinweises auf die Patenterteilung: **15.08.2007**
(21) Anmeldenummer: 04762678.3
(22) Anmeldetag: 18.08.2004
(51) Int. Cl.: A61C 8/00

(54) **EINSCHRAUBBARES ENOSSALES DENTALIMPLANTAT**
SCREW-IN ENOSSAL DENTAL IMPLANT
IMPLANT DENTAIRE INTRA-OSSEUX VISSABLE

(43) Veröffentlichungstag der Anmeldung: 04.10.2006
(73) Patentinhaber: Böttcher, Robert, 99885 Ohrdruf (DE)
(72) Erfinder: Böttcher, Robert, 99885 Ohrdruf (DE)
(74) Vertreter: Späth, Volker
(86) Internationale Anmeldenummer: PCT/DE2004/001834
(87) Internationale Veröffentlichungsnummer: WO 2006/017995

(56) Entgegenhaltungen:
- WO-A-01/21091
- DE-A1- 10 231 743
- DE-A1- 10 236 125
- DE-U1- 20 004 526

## Beschreibung

### Gebiet der Erfindung

Die Erfindung bezieht sich auf ein einschraubbares enossales Dentalimplantat mit einem parabolischen Grundkörper, der eine mit mindestens zwei Schnittkerben versehene, selbstschneidende Gewindeanordnung, die auch mehrgängig sein kann, mit parabolischem Gewindegrund aufweist, und einem coronal zur Gewindeanordnung vorgesehenem Oberteil mit Formloch für Einschraubhilfen und Gewinde zur Befestigung und Fixierung von Zahnkronen, Brücken und dergleichen, sowie mit einem balligen Enossalteil und gegebenenfalls einem Konusteil und/oder einer Kappe.

### Hintergrund der Erfindung

Einschraubbare Dentalimplantate, auch solche mit selbstschneidendem Gewinde, sind in vielfältigen Ausführungen seit langem bekannt.

So ist beispielsweise aus der Patentschrift DE 3735378 C2 ein Dentalimplantat mit einer Verankerungsvorrichtung bekannt, das aus einem langgestreckten zylindrischen Grundkörper besteht, dessen Gewinde im unteren Teil leicht konisch ausläuft. Hier ist eine nach außen verlaufende Öffnung vorgesehen, in die nach Setzen des Implantates Knochengewebe einwachsen kann, was zur besseren Haftfestigkeit führt. In den oberen Teil des Implantates ist eine mit einem Innengewinde versehene Bohrung eingebracht, wodurch verschiedene Adaptoren aufgenommen werden können, wie beispielsweise mit einem Gewinde versehene Kronen, Schrauben oder einzementierbare Zahnprothesen. Weiterhin ist eine abgeschrägte Wandfläche angebracht, die in ein Formloch für ein Einschraubwerkzeug ausläuft.

Weiterhin sind aus dem DE 200 22 420 U1 und DE 200 04 526 U1 konusförmige Implantate mit Schneidkanten bekannt, welche an ihren coronalen Enden einen größeren über einen längeren Bereich gleich bleibenden Durchmesser aufweisen als in ihren apicalen Enden. Es wird ein selbstschneidendes Gewinde verwendet, das zumindest auf einem Teilbereich durch eine Nut unterbrochen ist, so dass eine Schneidkante gebildet wird. Über den zylindrischen Gewindeabschnitt schließt sich in coronaler Richtung ein Verbindungsabschnitt an, der Formschlusselemente zum verdrehsicheren Halten eines Aufsatzes mit dem Zahnersatz aufweist.
Bei einem weiteren selbstschneidenden einschraubbaren Knochenimplantat für zahnärztliche Zwecke nach der DE 37 08 638 Al ist der Gewindekörper konisch, sein Gewinde aber zylindrisch verlaufend mit Anschnittkanten und keilartigen Ausschnitten versehen. Die Gewindeflanken haben unterschiedliche Flankenwinkel. Im oberen Teil des Implantatgrundkörpers ist ein Innengewinde vorgesehen, an welches sich ein Innensechskant anschließt.
Schließlich ist aus der WO 01/21091 A1 ein schraubenförmiges enossales Dentalimplantat mit apical gelegener Implantatspitze, einem sich nach koronal erstreckendem Implantathals und einem Außengewinde, dass eine im wesentlichen parabolische Aussenkontur mit der Implantatspitze als Scheitelpunkt aufweist, bekannt.

Aus der DE 102 31 743 A1 ist ein einschraubbares enossales Dentalimplantat gemäß des Oberbegriffs des Anspruchs 1 bekannt.

Die durch den aufgezeigten Stand der Technik bekannten Dentalimplantate bewirken auf Grund ihrer geometrischen Formen eine ungünstige Verteilung der Kompressionskräfte auf den Kieferknochen während des Setzvorganges. Um deren Wirkung im oberen Bereich völlig aufzuheben ist der zervikale Teil des Implantates zylindrisch gehalten, wobei durch das Fehlen nur einer geringen Kompression Verschlussprobleme und somit Infektionsgefahr entstehen können. Ferner sind die Schnittkerben häufig zu gering dimensioniert, so dass keine befriedigende Spanabführung beim Einschrauben des Implantats in den Knochen erfolgt, sowie die primäre Rotationssicherung nicht gegeben ist. Oft sind auch die Gewindeflanken zu gering dimensioniert mit der Folge, dass das Implantat keinen ausreichenden Halt im Knochen findet.

### Aufgabe der Erfindung

Es ist Aufgabe der Erfindung, ein einschraubbares enossales Dentalimplantat der eingangs genannten Art zu schaffen, welches die Nachteile des Standes der Technik beseitigt und dessen Durchmesser von apical nach crestal nicht proportional zunimmt und dessen unterer Teil während des Einschraubvorganges selbstzentrierend wirkt und bei dem die auf den Kieferknochen wirkenden Kompressionskräfte mit zunehmender Einschraubtiefe ungleichmäßig gegen Null gehen und ein sicherer Verschluss im enossalen Bereich erreicht wird.

### Zusammenfassung der Erfindung

Erfindungsgemäß wird die Aufgabe dadurch gelöst, dass
- der Oberteil zylindrisch ausgebildet ist und coronal zum Gewinde einen polierten Halsabschnitt aufweist,
- eine Rillenanordnung im crestalen Duchtritt zur Verhinderung von Knocheneinbrüchen aufweist, die Gewindeanordnung am Grundkörper von Parabeln P3,P4 und die Gewindespitzen von Parabeln P1,P2 begrenzt sind, so dass die Gewindeanordnung mit von apical nach crestal unmerklich abnehmender Gewindetiefe ausläuft, wobei die Gewindeanordnung bis an den Oberteil heranreicht,
- der Übergang vom Grundkörper zum balligen Enossalteil abgerundet ausgebildet ist, und
- die Schnittkerben jeweils eine maximale Tiefe von 1/3 des Durchmessers des Grundkörpers und eine Breite besitzen, die mindestens so groß ist wie die Breite der jeweils verbleibenden Gewindeanordnung zwischen den Schnittkerben.

Die Vorteile der Erfindung bestehen darin, dass während des Setzvorganges des Dentalimplantates durch dessen unteren Teil eine Selbstzentrierung erfolgt. Die Verteilung und Wirkung der seitlichen Kompressionskräfte auf den nach oben naturgemäß schwächer werdenden Kieferknochen passen sich diesen Verhältnissen an und erreichen beim enossalen Austritt nahezu Null, wobei ein schlüssiges Anliegen gewährleistet ist und somit ein sicherer Verschluss und die Vermeidung von Infektionen durch Eindringen von Keimen weitestgehend erreicht wird, was sich wiederum positiv auf den Heilungsprozess auswirkt.

Der polierte Halsabschnitt im zylindrischen Oberteil sorgt dafür, dass nach dem Einsetzen des Implantats die Schleimhaut weitestgehend reizfrei daran anliegt, so dass der Heilungsprozess beschleunigt und z.B. Zahnfleischentzündungen vorgebeugt wird. Der modifizierte Halsabschnitt gewährleistet eine gute Weichgewebsanlagerung des Zahnfleisches.

Bei einigen bekannten Dentalimplantaten besteht ein Zwischenraum zwischen Oberteil und Gewindeanordnung am Grundkörper. Erfindungsgemäß wird dieser Zwischenraum vermieden, so dass die Gewindeanordnung bei nahezu unveränderter Querschnittsgeometrie der Gewindeflanken, also ohne merkliche Verjüngung, direkt bis an den Oberteil heranreicht. Das kräftige Gewinde wird also über die gesamte Länge des Grundkörpers genutzt, so dass das Dentalimplantat fest im Knochen verankert ist, dadurch die Primärstabilität verbessert wird und der Durchtrittsbereich des Implantats in den Knochen spannungsfrei bleibt.

Der Verlauf der Parabeln am Grundkörper und an den Gewindespitzen verleiht dem Gewinde Systemcharakter, d.h. die Parabel des Grundkörpers schneidet die Parabel des Gewindegrundes nicht. Dies ermöglicht eine Optimierung der Fräswerkzeuge für das Dentalimplantat, indem Universalfräser bei gleichem Implantatdurchmesser verwendet werden können. Weiterhin kann hierdurch der Grundkörper schlanker ausgeführt werden.

Des weiteren bewirkt die Dimensionierung der Schnittkerben bessere Einbringbarkeit, eine optimale Spansetzung und bessere Spanabfuhr beim Einsetzen des Implantats und einen sicheren primären und sekundären Rotationsschutz. Zweckmäßigerweise sind mindestens drei Schnittkerben von apical bis mindestens in den fünften Gewindegang eingebracht.

Schließlich bewirkt der abgerundete Übergang vom Grundkörper zum balligen Enossalteil eine Verminderung der Verletzungsgefahr beim Einbringen des Implantats in den Knochen, speziell im Oberkiefer Seitenzahnbereich.

Nach einer weiteren Ausgestaltung der Erfindung weist der zylindrische Oberteil eine Höhe von etwa 2 mm auf, wobei der polierte Halsabschnitt am zylindrischen Oberteil eine Höhe von etwa 0,75 mm aufweist.

Gemäß einer weiteren Ausgestaltung des Dentalimplantats ist im Zentrum des Oberteils eine zylindrische Bohrung vorgesehen, die in Richtung apical mit einem Gewinde beginnt und crestal in ein Innensechskant mit einer 60 Grad-Fase endet.

Weiterhin ist ein Bund als Abschluss am Oberteil ausgebildet, an den sich das Konusteil mit vorzugsweise Innensechskant und Bohrung mit Gewinde anschließt. Das Konusteil dient als eine Aufnahme und der Bund als eine Anlage für eine Kappe, die mit einer Befestigungsschraube fixiert sein kann. Der Konusteil ist eingekerbt und bietet einen Rotationsschutz für die aufzunehmende Kappe.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nicht nur durch die Ansprüche definiert.

### Kurze Beschreibung der Zeichnungen

Die Erfindung wird in der nachfolgenden Beschreibung anhand von Ausführungsbeispielen, die in den Zeichnungen dargestellt sind, näher erläutert. Es zeigen:
- Fig. 1: eine Vorderansicht eines erfindungsgemäßen Dentalimplantats nach einer ersten Ausführungsform,
- Fig. 2: eine Schnittansicht des Dentalimplantat gemäß Fig. 1,
- Fig. 3: eine Vorderansicht eines Dentalimplantats nach einer zweiten Ausführungsform,
- Fig. 4: eine Schnittansicht des Dentalimplantat gemäß Fig. 3,
- Fig. 5: eine Vorderansicht eines Dentalimplantats nach einer dritten Ausführungsform, und
- Fig. 6: eine Schnittansicht des Dentalimplantat gemäß Fig.
5. mit Kappe

### Detaillierte Beschreibung der Zeichnungen

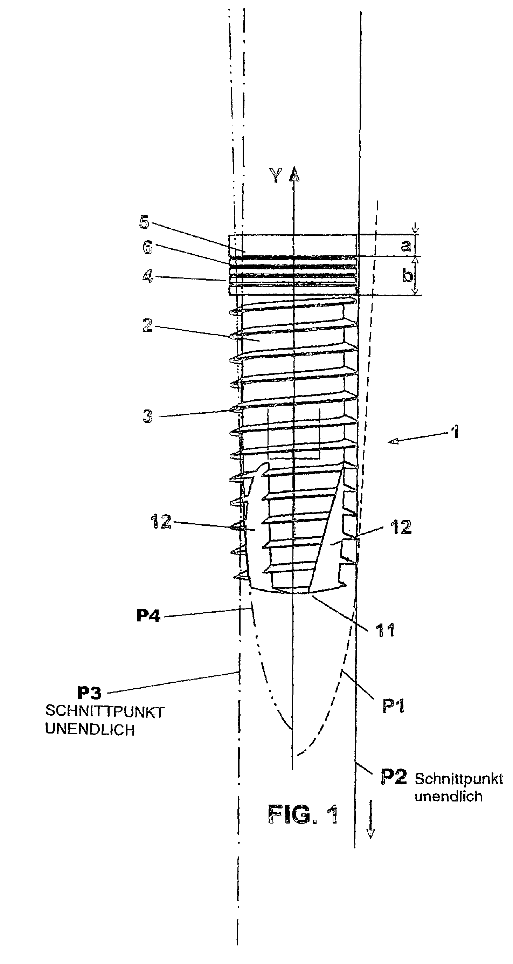

Das erfindungsgemäße Dentalimplantat 1 gemäß den Fig. 1 bis 6 besteht aus einem sich von crestal nach apical verjüngenden Grundkörper 2, der von apical nach crestal mit einem selbstschneidenden asymmetrischen Gewinde 3, welches auch mehrgängig ausgeführt sein kann, mit im Wesentlichen gleich bleibender oder unmerklich abnehmender Gewindetiefe versehen ist. Der Gewindequerschnitt bildet ein ungleichmäßiges Dreieck, dessen Flankenwinkel 20 Grad beträgt. Die Gewindehöhe und somit das Gewinde 3 werden von Parabeln P1, P2 sowie P3,P4 umhüllt, deren Symmetrieachse die des Grundkörpers 2 und zur besseren Veranschaulichung die Y-Achse eines kartesischen Koordinatensystems ist.

Die vorteilhafte Auswahl der Parabeln P3 und P4 bewirkt die Gewindeanordnung am Grundkörper 2, wobei die Parabeln P1 und P2 die Gewindespitze begrenzen. Die Parabeln P1 und P2 bilden außerhalb des Bereiches des Dentalimplantats 1 einen Schnittpunkt, wie in Fig. 1 dargestellt ist. Dadurch läuft die Gewindeanordnung von apical nach crestal aus. Das Gewinde 3 reicht bis an ein gewindefreies oberflächenbehandeltes Oberteil 4 heran, welches coronal zur Gewindeanordnung an den Grundkörper 2 anschließt.

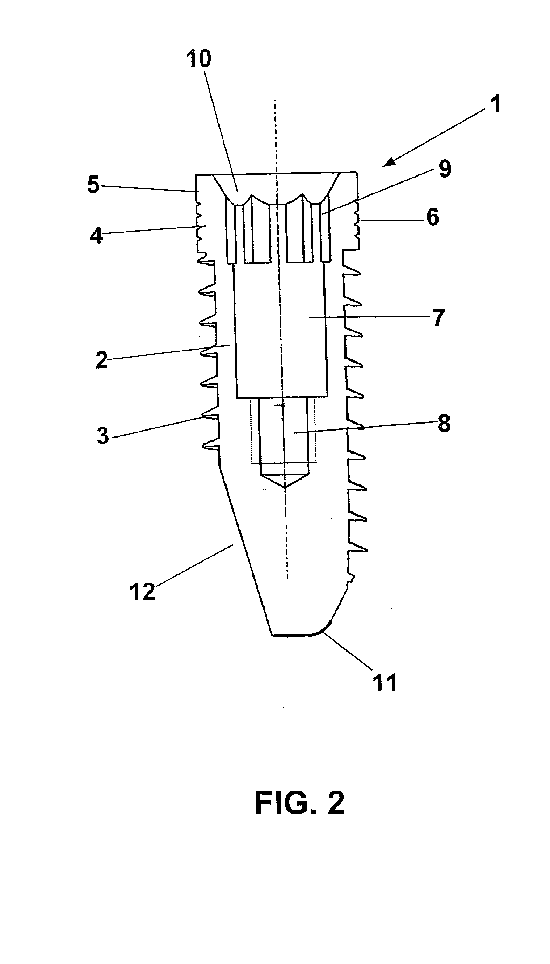

Der Oberteil 4 ist zylindrisch ausgebildet, hat also keine der Parabeln angepasste Form, und besitzt einen coronal zum Gewinde 3 weggerichteten polierten Halsabschnitt 5. Der Oberteil 4 hat eine Höhe b von vorzugsweise 1,25 mm und der polierte Halsabschnitt 5 eine Höhe a von vorzugsweise 0,75 mm. Im Höhenbereich b des Oberteils 4 besitzt dieses eine Mehrzahl von umlaufenden Rillen 6 zum Schutz der Korticalis im Durchtrittbereich.
In den zylindrischen Oberteil 4 ist gemäß Fig. 2 eine zylindrische Bohrung 7 mit einem nach apical verlaufendem Gewinde 8 eingebracht, die bis in den Grundkörper 2 hineinführt. Die Bohrung 7 ist mit einem Innensechskant 9 versehen, das in eine Fase 10 von 60 Grad ausläuft. Der obere Abschluss des Oberteils 4 ist plangeschliffen. Dies garantiert eine Dichtheit zwischen Implantat und Aufbauten. Gleichzeitig ist durch diese Gesamtgeometrie ein sicheres Adaptieren von diversen Aufbauteilen möglich, welche durch den Innensechskant 9 gegen Rotation gesichert werden und eine sichere kraft- und formschlüssige Verbindung ergeben.

Am apicalen Ende geht der Grundkörper 2 in ein balliges Enossalteil 11 über, wobei der Übergang vom Grundkörper 2 zum balligen Enossalteil 11 abgerundet ist. Das Enossalteil 11 kann auch von einem Kreisbogen mit großem Radius oder von einem Ellipsenbogen gebildet werden.
Drei vorteilhaft um 120 Grad versetzte Schnittkerben 12 verlaufen vom balligen Enossalteil 11 in Richtung crestal über mindestens fünf Gewindegänge. Die Schnittkerben 12 haben jeweils eine maximale Tiefe von 1/3 des Durchmessers des Grundkörpers 2 und eine Breite, die mindestens so groß ist wie die Breite der jeweils verbleibenden Gewindeanordnung zwischen den Schnittkerben 12.

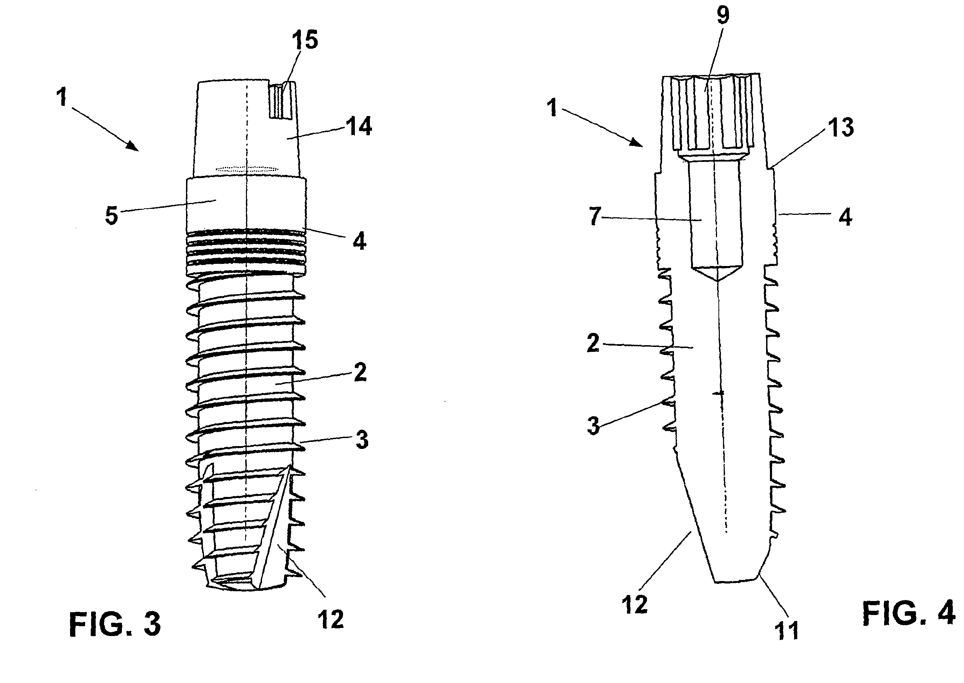

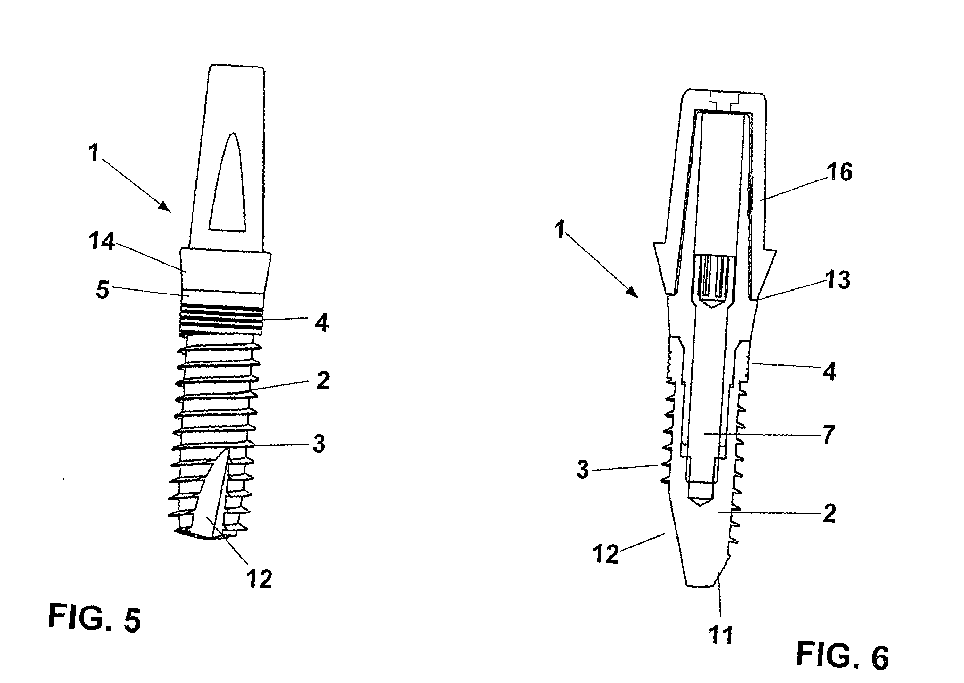

Der Grundkörper 2 besteht aus Titan und ist additiv oder subtraktiv zur Oberflächenoptimierung bearbeitet um optimale Einheilzeiten zu erreichen.
Bei einem weiteren Ausführungsbeispiel nach den Fig. 3 und 4 schließt der zylindrische Oberteil 2 im gingivalen Durchtrittsbereich mit einem Bund 13, an den sich coronal ein Konusteil 14 von etwa 6 Grad Konusneigung anschließt, der vorteilhaft mit einem internen Sechskant und Gewinde zur sicheren Fixierung und Arretierung einer bündig aufsitzenden Kappe 16 gemäß den Fig. 5 und 6 versehen ist. Die zentrale Bohrung 7 mit Gewinde 8 befindet sich somit gemäß Fig. 4 im Bereich des Oberteils 4 und des Konusteils 14. Der Bund 13 dient dem exakten Randabschluss der Kappe 16, welche auf dem konusartigen Teil 9 befestigt ist. Dabei dient die Aussparung 15 der Rotationssicherung der Kappe 16.

Bei der Ausführungsform des Dentalimplantats nach den Fig. 5 und 6 ist die Kappe 16 als primäres Element einer nicht gezeigten Stegverbindung nutzbar. Die Kappe 16 kann individuell von coronal gekürzt und über eine zentrale okklusale Verschraubung z.B. mittels der Befestigungsschraube sicher fixiert werden. Sie dient vornehmlich der Prothesenankopplung im Sinne bedingt abnehmbarer Prothesen, welche über Stege bzw. Konusverbindungen mit den Implantaten eine funktionelle Einheit bilden. In besonderen Situationen können auch Einzelkronen, von okklusal verschraubt, auf dem Dentalimplantat 1 befestigt werden. Hierbei dient die Aussparung 15 der Rotationssicherung der Krone.

Die Wirkungsweise des erfindungsgemäßen Dentalimplantats ist folgende:

Nach dem in bekannter Weise z.B. mit einem Dentalbohrer die Öffnung für das zu setzende Dentalimplantat 1 in den Kieferknochen gelegt worden ist, erfolgt sein Einsetzen. Hierzu wird der Grundkörper 2 mit einem geführten Schraubwerkzeug in die Kieferöffnung eingeschraubt. Dabei ermöglichen die im apicalen Teil gelegenen Schnittkerben 12 ein schonendes Schneiden und im Weiteren die Sicherung gegen Verdrehen. Die parabolischzylindrische Form des Dentalimplantates 1 wirkt zentrierend und presst sich schonend in das zylindrisch aufbereitete Knochenlager. Ein geringer Knochenabrieb bei gleichzeitig sehr guter Primärstabilität ist die Folge und Voraussetzung für eine gute Osseointegration des Dentalimplantats 1.
Der apicale abgerundete Enossalteil 11 dient dem Schutz der Kieferhöhlenmembran beim Einsatz des Dentalimplantates 1 in der Oberkiefer-Seitenzahnregion, insbesondere bei reduzierten Knochenhöhen und der Notwendigkeit des indirekten und direkten Sinusliftes.

Infolge des parabolischen Auslaufes des Grundkörpers 2 im zylindrischen Oberteil 4 werden geringste Kompressionskräfte im oberen Bereich der Setzbohrung wirksam, so dass der enossale Austritt sicher verschlossen wird.
Die passgenau dargestellte mit Sicherungszapfen versehene konische Kappe 16 kann wiederum als Kronengerüst Verwendung finden und mit zahnfarbenen Materialien (Kunststoffe oder Keramik) beschichtet werden.

### Bezugszeichenliste

| | |
|---|---|
| 1 | Dentalimplantat |
| 2 | Grundkörper |
| 3 | Gewinde der Gewindeanordnung |
| 4 | Oberteil |
| 5 | Halsabschnitt |
| 6 | Rille |
| 7 | Bohrung |
| 8 | Gewinde |
| 9 | Innensechskant |
| 10 | Fase |
| 11 | Enossalteil |
| 12 | Schnittkerbe |
| 13 | Bund |
| 14 | Konusteil |
| 15 | Aussparung |
| 16 | Kappe |
| | |
| | |
| | |

## Patentansprüche

1. Einschraubbares enossales Dentalimplantat (1) mit einem parabolischen Grundkörper (2), der eine mit mindestens zwei Schnittkerben (12) versehene, selbstschneidende Gewindeanordnung (3), die auch mehrgängig sein kann, mit parabolischem Gewindegrund aufweist, und einem coronal zur Gewindeanordnung (3) vorgesehenem Oberteil (4) mit Formloch (7) für Einschraubhilfen und Gewinde (8) zur Befestigung und Fixierung von Zahnkronen, Brücken und dergleichen, sowie mit einem balligen Enossalteil (11) und gegebenenfalls einem Konusteil (14) und/oder einer Kappe (16), wobei die Gewindeflanken der Gewindeanordnung (3) einen Flankenwinkel von 20 Grad aufweisen,
**dadurch gekennzeichnet, dass**
- der Oberteil (4) zylindrisch ausgebildet ist, das coronal zum Gewinde (3) einen polierten Halsabschnitt (5) und dazwischen umlaufende Rillen aufweist,
- die Gewindeanordnung (3) am Grundkörper (2) von Parabeln (P3), (P4) und die Gewindespitze von Parabeln (P1), (P2) begrenzt sind, welche außerhalb des Bereiches des Dentalimplantats (1) einen Schnittpunkt bilden, so dass die Gewindeanordnung (3) mit von apical nach crestal unmerklich abnehmender Gewindetiefe ausläuft, wobei die Gewindeanordnung (3) bis an den Oberteil (4) heranreicht,
- der Übergang vom Grundkörper (2) zum balligen Enossalteil (11) abgerundet ausgebildet ist, und
- die Schnittkerben (12) jeweils eine maximale Tiefe von 1/3 des Durchmessers des Grundkörpers (2) und eine Breite besitzen, die mindestens so groß ist wie die Breite der jeweils verbleibenden Gewindeanordnung (3) zwischen den Schnittkerben (12).

2. Dentalimplantat nach Anspruch 1, **dadurch gekennzeichnet, dass** der zylindrische Oberteil (4) eine Höhe von etwa 2 mm aufweist.

3. Dentalimplantat nach Anspruch 1, **dadurch gekennzeichnet, dass** im Zentrum des Oberteils (4) eine zylindrische Bohrung (7) vorgesehen ist, die in Richtung apical mit einem Gewinde (8) beginnt und crestal in ein Innensechskant (9) mit einer 60 Grad-Fase (10) übergeht und mit einem Planschliff endet.

4. Dentalimplantat nach Anspruch 1, **dadurch gekennzeichnet, dass** der polierte Halsabschnitt (5) am zylindrischen Oberteil (4) eine Höhe von etwa 0,75 mm aufweist.

5. Dentalimplantat nach Anspruch 1, **dadurch gekennzeichnet, dass** mindestens drei Schnittkerben (12) von apical bis mindestens in den fünften Gewindegang eingebracht sind.

6. Dentalimplantat nach Anspruch 1, **dadurch gekennzeichnet, dass** ein Bund (13) als Abschluss am Oberteil (4) ausgebildet ist.

7. Dentalimplantat nach Anspruch 6, **dadurch gekennzeichnet, dass** sich an den Bund (13) das Konusteil (14) mit Innensechskant (9), Aussparung (15) und Gewinde anschließt.

8. Dentalimplantat nach Anspruch 7, **dadurch gekennzeichnet, dass** das Konusteil (14) eine Aufnahme und der Bund (13) eine Anlage für eine Kappe (16) sind.

9. Dentalimplantat nach Anspruch 8, **dadurch gekennzeichnet, dass** die Kappe (16) mit einer Befestigungsschraube fixiert ist.

## Claims

1. Threaded endosseous dental implant (1) with a parabolic basic body (2) showing a self-tapping thread construction (3), provided with at least two cutting notches (12), with a parabolic groove of the thread and a top part (4) that is provided coronally to the thread construction (3), with a shaped hole (7) for screw-in aids and threads (8) for the fastening and fixing of dental crowns, bridges and similar things, as well as with a convex endosseous part (11) and, if necessary, a conical part (14) and/or a cap (16), whereas the thread flanks of the thread construction (3) show a flank angle of 20 degrees,
**characterised by the fact** that
- the upper part (4) has been designed cylindrically and coronally to the thread (3), shows a polished neck section (5) and in between, circular grooves,
- the thread construction (3) at the basic body (2) is limited by a parable (P2) and the groove of the thread is limited by a parable (P1) forming intersection points (S1; S2) outside the area of the dental implant (1) so that the thread construction (3) tapers with a thread depth that is imperceptively declining from the apical to the crestal end, whereas the thread construction (3) reaches up to the upper part (4),
- the transition from the basic body (2) to the convex endosseous part (11) has been designed having a round form, and
- the cutting notches (12) have in each case a maximal depth of 1/3 of the basic body's (2) diameter and a width that is at least as large as the width of the respective remaining thread construction (3) between the cutting notches (12).

2. Dental implant according to claim 1, **characterised by the fact** that the cylindrical upper part (4) is approximately 2 mm high.

3. Dental implant according to claim 1 **characterised by the fact** that the centre or the upper part (4) has been provided with a cylindrical drilling (7) starting in the apical direction with a thread (8) and ending in the crestal end with a hexagon socket (9) with a 60-degree chamfer (10).

4. Dental implant according to claim 1 **characterised by** the fact that the polished neck section (5) at the cylindrical upper part (4) is approximately 0.75 mm high.

5. Dental implant according to claim 1 **characterised by the** fact that at least three cutting notches (12) are provided from the apical end to at least the fifth turn of the thread.

6. Dental implant according to claim 1 **characterised by the** fact that a collar (13) has been designed as termination at the upper part (4).

7. Dental implant according to claim 6 **characterised by** the fact that the collar (13) is followed by the conical part (14) with hexagon socket (9), gap (15) and thread.

8. Dental implant according to claim 7 **characterised by the** fact that the conical part (14) is an intake and the collar (13) is a stop for a cap (16).

9. Dental implant according to claim 8 **characterised by the fact** that the cap (16) has been fixed using a fastening screw.

## Revendications

1. Implant dentaire intra-osseux (1) vissable avec un corps de base (2) parabolique présentant une disposition filetée (3) à fond de filet parabolique autotaraudeuse pourvue d'au moins deux entailles (12) et d'une partie supérieure (4) prévue de façon coronaire par rapport à la disposition filetée (3) avec trou formé (7) pour aide de vissage et filetage (8) afin de fixer et de stabiliser des couronnes dentaires, des bridges et similaires ainsi que d'une partie intra-osseuse bombée (11) et le cas échéant d'une partie conique (14) et/ou d'une calotte (16), les flancs de filet de la disposition filetée (3) présentant un angle de flanc de 20 degrés,
**caractérisé en ce que**
- la partie supérieure (4) est formée cylindriquement présentant coronairement au filetage (3) une section de col (5) polie, et des rainures circonférentielles,
- la disposition filetée (3) au corps de base (2) est limitée par une parabole (P2) et le fond de filet par une parabole (P1) formant des points d'intersection (S1; S2) hors de la zone de l'implant dentaire (1) de façon que la disposition filetée (3) passe d'apical à crestal avec une profondeur de filetage imperceptiblement décroissante, la disposition filetée (3) arrivant jusqu'à la partie supérieure (4),
- le passage du corps de base (2) vers la partie intra-osseuse (11) a une forme arrondie, et
- les entailles (12) possèdent respectivement une profondeur maximale de 1/3 du diamètre du corps de base (2) et une largeur qui est au moins aussi importante que la largeur de la disposition filetée (3) restant entre les entailles (12).

2. Implant dentaire selon la revendication 1, **caractérisé en ce que** la partie supérieure (4) cylindrique présente une hauteur d'env. 2 mm.

3. Implant dentaire selon la revendication 1, **caractérisé en ce que** dans le centre de la partie supérieure (4) est prévu un trou (7) cylindrique qui commence en direction apicale par un filetage (8) et qui finit de façon crestale en un six pans creux (9) avec un biseau (10) de 60 degrés.

4. Implant dentaire selon la revendication 1, **caractérisé en ce que** la section de col (5) poli à la partie supérieure 4 cylindrique présente une hauteur d'env. 0,75 mm.

5. Implant dentaire selon la revendication 1, **caractérisé en ce qu'au** moins trois entailles (12) sont appliquées d'apical jusqu'au moins au cinquième pas de vis.

6. Implant dentaire selon la revendication 1, **caractérisé en ce qu'**une embase (13) est formée comme bordure à la partie supérieure (4).

7. Implant dentaire selon la revendication 6, **caractérisé en ce que** la partie conique 14 jouxte l'embase (13) avec les six pans creux (9), la cavité (15) et le filetage.

8. Implant dentaire selon la revendication 7, **caractérisé en ce que** la partie conique 14 est un logement et l'embase (13) une surface de pose pour une calotte (16).

9. Implant dentaire selon la revendication 8, **caractérisé en ce que** la calotte (16) est fixée par une vis de fixation.
